# FASCICULE DE BREVET EUROPEEN

(11) **EP 1 917 082 B1**
(45) Date de publication et mention de la délivrance du brevet: **17.02.2010**
(21) Numéro de dépôt: 06794327.4
(22) Date de dépôt: 11.08.2006
(51) Int. Cl.: B01D 15/16, B01D 15/40, B01D 11/02, B01D 11/04

(54) **PROCEDE ET INSTALLATION POUR LA REGULATION DU TAUX DE MODIFICATEUR DANS UNE CHROMATOGRAPHIE OU EXTRACTION SUPERCRITIQUE AVEC RECYCLAGE**
VERFAHREN UND VORRICHTUNG ZUR REGULIERUNG DES MODIFIKATORNIVEAUS BEI DER CHROMATOGRAPHIE ODER ÜBERKRITISCHEN EXTRAKTION MIT REZYKLIERUNG
METHOD AND INSTALLATION FOR REGULATING THE MODIFIER LEVEL IN CHROMATOGRAPHY OR SUPERCRITICAL EXTRACTION WITH RECYCLING

(30) Priorité: 12.08.2005 FR 0508535
(43) Date de publication de la demande: 07.05.2008
(73) Titulaire: Pic Solution, 84491 Avignon (FR)
(72) Inventeur: SHAIMI, Mohamed, F-84140 Montfavet (FR)
(74) Mandataire: Bentz, Jean-Paul
(86) Numéro de dépôt international: PCT/FR2006/001946
(87) Numéro de publication internationale: WO 2007/020352

(56) Documents cités:
- EP-A- 0 254 610
- EP-A- 0 567 165
- US-A- 4 871 453
- US-A1- 2004 014 590
- US-B1- 6 766 810
- GONZALEZ L M ET AL: "Measurement of diffusion coefficients for 2-nitroanisole, 1,2-dichlorobenzene and tert-butylbenzene in carbon dioxide containing modifiers" JOURNAL OF SUPERCRITICAL FLUIDS, PRA PRESS, US, vol. 24, no. 3, décembre 2002 (2002-12), pages 219-229, XP004390288 ISSN: 0896-8446

## Description

La présente invention concerne, de façon générale, les procédés qui font appel à un fluide dans un état supercritique et, en particulier, le domaine de la chromatographie et de l'extraction en phase supercritique.

Plus précisément, l'invention concerne, selon un premier de ses aspects, un procédé de chromatographie ou extraction, comprenant :
- une opération de séparation dans une colonne ou un extracteur, ladite colonne ou ledit extracteur recevant un produit et étant alimenté en un éluant incluant un fluide supercritique, amené par un premier pompage, et un modificateur, amené par au moins un deuxième pompage,
- une opération de collecte d'au moins une fraction du produit en aval de la colonne ou de l'extracteur,
- une opération de recyclage du fluide supercritique mélangé à une quantité résiduelle de modificateur, faisant suite à l'opération de collecte et précédant le premier pompage, ledit premier pompage servant à pomper au moins ledit fluide supercritique mélangé à une quantité résiduelle de modificateur, et
- une opération de condensation faisant suite à l'opération de collecte et précédant le premier pompage.

Un tel procédé de chromatographie ou extraction, dans lequel le fluide supercritique est recyclé, est connu de l'homme du métier.

Le recyclage du fluide supercritique est préférable afin de réduire le coût de mise en oeuvre du procédé et les manipulations nécessaires, particulièrement quand des débits élevés sont employés.

Par exemple, à un débit de dioxyde de carbone (CO₂), en tant que fluide supercritique, de 80 ml/min, environ 115 kg de CO₂ sont perdus toutes les 24 heures si il n'est pas recyclé. Cette perte représente un coût considérable.

Dans un procédé classique de chromatographie ou extraction en phase supercritique, l'ajout d'un modificateur est souvent nécessaire pour augmenter la polarité du fluide supercritique.

En chromatographie et en extraction, le taux de modificateur à l'entrée de la colonne de chromatographie ou de l'extracteur est un paramètre important affectant les performances du procédé.

Lorsque le fluide supercritique n'est pas recyclé, ce taux de modificateur est facilement maintenu constant en ce qu'il dépend du débit de la pompe fournissant le modificateur ainsi que du débit de la pompe fournissant le fluide supercritique, ces deux débits étant eux-mêmes maintenus constants.

Au contraire, lorsque le fluide supercritique est recyclé à la suite de l'opération de collecte, une certaine quantité de modificateur peut l'être aussi. Il s'en suit une variation du taux de modificateur en entrée de colonne ou d'extracteur, qui est néfaste au procédé.

En chromatographie par exemple, une variation du taux de modificateur à l'entrée de la colonne affecte les temps de rétention, la résolution et parfois la sélectivité des produits élués et par conséquent la stabilité du procédé.

Il en est de même pour l'extraction, dans laquelle le taux de modificateur affecte le temps d'extraction et la concentration en produit extrait.

On connaît le brevet français FR 2 601 883, qui concerne un procédé et un dispositif de séparation à l'aide d'un fluide supercritique, dans lesquels le fluide supercritique est recyclé.

Après l'opération de séparation et avant son recyclage, le fluide supercritique, en phase gazeuse ou quasi-gazeuse et qui contient une quantité résiduelle de modificateur, est mis en contact avec du modificateur en phase liquide dans un contacteur classique gaz/liquide.

La composition de la phase de plus faible masse volumique (gazeuse ou quasi-gazeuse) est ajustée en faisant varier la pression et la température de manière à avoir en sortie du contacteur le mélange voulu fluide supercritique-modificateur.

Cependant, ce procédé est limité, du fait des équilibres thermodynamiques à respecter dans le contacteur, à des mélanges contenant au maximum 10% en poids de modificateur.

De plus, ce procédé est de réalisation complexe. Il entraîne en effet la mise en oeuvre d'un certain nombre d'éléments dans et en relation avec le contacteur, tel qu'un système de remplissage et de contrôle du niveau de modificateur, un garnissage, un matériau fritté et un dispositif dévésiculeur.

Dans ce contexte, la présente invention a pour but de proposer un procédé de chromatographie ou extraction dans lequel le fluide supercritique est recyclé, exempt des limitations de l'art antérieur.

A cette fin, le procédé de l'invention, par ailleurs conforme à la définition générique qu'en donne le préambule ci-dessus, est essentiellement caractérisé en ce qu'il comprend en outre :
- en aval de l'opération de collecte et en amont de l'opération de séparation, une opération de détermination d'au moins une grandeur liée au taux de modificateur mélangé au fluide supercritique recyclé, et si nécessaire
- une opération de correction du débit du premier pompage et du débit du deuxième pompage afin de limiter les variations, au cours du procédé, du taux de modificateur dans l'éluant à l'entrée de la colonne ou de l'extracteur, et dans un sens propre à atteindre une première consigne, préalablement définie, de débit total correspondant à la somme des débits du premier pompage et du deuxième pompage.

L'invention présente donc l'avantage de proposer un contrôle du taux de modificateur en entrée de la colonne ou de l'extracteur. En conséquence, le procédé selon l'invention est plus stable que les procédés de l'art antérieur qui utilisent un modificateur et recyclent le fluide supercritique sans régulation du taux de modificateur. On entend par stabilité du procédé le maintien de l'ensemble de ses paramètres (températures, pressions, débits, taux, etc.) à des valeurs constantes. En particulier, le procédé selon l'invention permet de s'assurer d'une variation minimale du taux de modificateur en entrée de colonne ou d'extracteur.

En outre, dans le procédé selon l'invention, il n'existe aucune limitation du taux de modificateur dans l'éluant. L'utilisateur peut choisir de constituer un éluant contenant entre 0 et 100% de modificateur.

De manière générale, un éluant constitue la phase mobile d'une chromatographie ou d'une extraction. Selon l'invention, la phase mobile est à base d'un fluide choisi parmi tout fluide compatible avec une application en chromatographie ou extraction en phase supercritique. On appellera ci-après un tel fluide un fluide supercritique, même si, dans certaines conditions de pression et de température, le fluide n'est pas dans un état supercritique au sens strict du terme. L'état supercritique correspond à une valeur de pression P supérieure à la pression critique Pc et à une valeur de température T supérieure à la température critique Tc. On inclut aussi dans l'état supercritique l'état subcritique pour lequel P>Pc et T<Tc.

On parle de fluide supercritique ou subcritique en se référant au fluide dont la masse volumique et donc le pouvoir solvant subissent une grande variation avec la pression et la température lorsqu'il est pur.

Par simplification, on se réfère à l'état supercritique ou subcritique, l'état qu'aurait le fluide s'il était seul dans les conditions de pression et de température citées, même si dans ces conditions il est mélangé à un autre solvant et que l'état du mélange n'est pas nécessairement supercritique ou subcritique.

On parle enfin de fluide supercritique recyclé même si le fluide dans les conditions de température et de pression n'est pas dans un état supercritique au sens strict du terme, mais dans un état qui peut être gazeux (température étant supérieure à la température d'équilibre liquide-vapeur pour le fluide pur à la pression de travail inférieure à la pression critique) ou liquide (température étant inférieure à la température d'équilibre liquide-vapeur pour le fluide pur à la pression de travail inférieure à la pression critique).

L'éluant peut en outre inclure un solvant liquide ou un mélange de solvants liquide, qui constitue un modificateur. Le modificateur peut être un solvant organique. Il est ajouté pour modifier la polarité du fluide supercritique.

On entend par grandeur liée au taux de modificateur toute grandeur à partir de laquelle peut être obtenue, directement ou indirectement, la valeur du taux de modificateur. Ainsi, cette grandeur peut être le taux de modificateur lui-même.

Dans un premier mode de réalisation préféré de l'invention, l'opération de détermination d'au moins une grandeur liée au taux de modificateur mélangé au fluide supercritique recyclé a lieu en amont des premier et deuxième pompages et comprend :
- une opération de mesure, en au moins un point de mesure, de la masse volumique du fluide supercritique recyclé mélangé à une quantité résiduelle de modificateur, et
- une opération d'évaluation du taux de modificateur mélangé au fluide supercritique recyclé, le taux de modificateur étant évalué, à partir de la masse volumique mesurée, par l'intermédiaire d'une courbe de calibration masse volumique=f(taux de modificateur) préalablement établie à la pression et la température régnant au point de mesure et autour de celui-ci ; et
l'opération de correction consiste à modifier le débit du premier pompage et le débit du deuxième pompage afin de satisfaire la première consigne et une deuxième consigne, préalablement fixée, de taux de modificateur dans l'éluant.

Dans ce premier mode de réalisation, de préférence, le premier pompage et le deuxième pompage ont lieu en parallèle l'un de l'autre. Le deuxième pompage peut aussi avoir lieu en amont du premier pompage.

Selon un deuxième mode préféré de réalisation de l'invention, l'opération de détermination d'une grandeur liée au taux de modificateur dans l'éluant consiste à mesurer la masse volumique de l'éluant en amont du premier pompage et en aval du deuxième pompage, et l'opération de correction consiste à modifier le débit du premier pompage et le débit du deuxième pompage dans un sens propre à atteindre la première consigne et une troisième consigne, préalablement fixée, de masse volumique de l'éluant.

De préférence, l'opération de détermination d'au moins une grandeur liée au taux de modificateur mélangé au fluide supercritique recyclé est effectuée en aval ou en amont de l'opération de condensation.

De manière avantageuse, le procédé selon l'invention peut comprendre en outre au moins une opération de régulation de la pression suivie d'au moins une opération de régulation de la température, en aval de l'opération de séparation et en amont de l'opération de collecte.

L'invention concerne également une installation de chromatographie ou d'extraction comprenant :
- un dispositif de séparation tel qu'une ou plusieurs colonnes de chromatographie ou un extracteur, qui reçoit un produit et est alimenté en un éluant comprenant un fluide supercritique, amené par une première pompe, et un modificateur, amené par au moins une deuxième pompe,
- un dispositif de collecte d'au moins une fraction du produit séparée dans le dispositif de séparation,
- une voie de recyclage du fluide supercritique mélangé à une quantité résiduelle de modificateur, en aval du dispositif de collecte et en amont de la première pompe, ladite première pompe pompant au moins ledit fluide supercritique mélangé à une quantité résiduelle de modificateur, et
- un condenseur placé en aval du dispositif de collecte et en amont de la première pompe,
ladite installation étant caractérisée en ce qu'elle inclut en outre un dispositif de mesure et correction, placé sur la voie de recyclage ou en aval de la première pompe et en amont du dispositif de séparation, qui mesure au moins une grandeur liée au taux de modificateur mélangé au fluide supercritique recyclé et qui, si nécessaire, effectue la correction du débit de la première pompe et du débit de la deuxième pompe afin de limiter les variations, au cours du fonctionnement de l'installation, dudit taux à l'entrée du dispositif de séparation, et dans un sens propre à atteindre une première consigne, préalablement définie, de débit total correspondant à la somme des débits de la première pompe et de la deuxième pompe.

Selon un premier mode de réalisation préféré de l'invention, le dispositif de mesure et correction est placé en un point de mesure situé en amont des première et deuxième pompes et mesure la masse volumique du fluide supercritique recyclé et mélangé à une quantité résiduelle de modificateur, à partir de laquelle il évalue le taux de modificateur mélangé au fluide supercritique recyclé par l'intermédiaire d'une courbe de calibration densité=f(taux de modificateur) pré-établie à la pression et la température régnant au point de mesure et autour de celui-ci ; et ledit dispositif de mesure et correction modifie le débit de la première pompe et le débit de la deuxième pompe afin d'atteindre la première consigne et une deuxième consigne, préalablement fixée, de taux de modificateur dans l'éluant.

Dans ce premier mode de réalisation, de préférence, la première pompe et la deuxième pompe sont montées en parallèle l'une de l'autre. La deuxième pompe peut aussi être placée en amont de la première pompe.

Selon un deuxième mode de réalisation préféré de l'invention, le dispositif de mesure et correction mesure la masse volumique de l'éluant en amont de la première pompe et en aval de la deuxième pompe, et la correction consiste à modifier le débit de la première pompe et le débit de la deuxième pompe dans un sens propre à atteindre la première consigne et une troisième consigne, préalablement fixée, de masse volumique de l'éluant.

Le dispositif de mesure et correction peut être placé en aval ou en amont du condenseur.

Selon un mode de réalisation particulier, l'installation selon l'invention inclut en outre un dispositif pour réguler la pression, par exemple un détendeur, suivi d'un dispositif pour réguler la température de l'éluant, par exemple pour chauffer celui-ci, en aval du dispositif de séparation et en amont du dispositif de collecte.

L'invention est de manière avantageuse mise en oeuvre avec, comme fluide supercritique, le dioxyde de carbone.

Comme modificateur, on utilise de préférence un solvant organique liquide, par exemple un alcool.

D'autres caractéristiques et avantages de l'invention ressortiront clairement de la description détaillée qui en est faite ci-après, à titre indicatif et nullement limitatif, en référence aux dessins annexés dans lesquels :
- la figure 1 représente un schéma d'un mode de réalisation du procédé selon l'invention,
- la figure 2 représente une courbe de calibration masse volumique = f(taux de modificateur) pouvant être utilisée conformément à l'invention, et
- les figures 3 et 4 représentent chacune un schéma d'une installation conforme à l'invention.

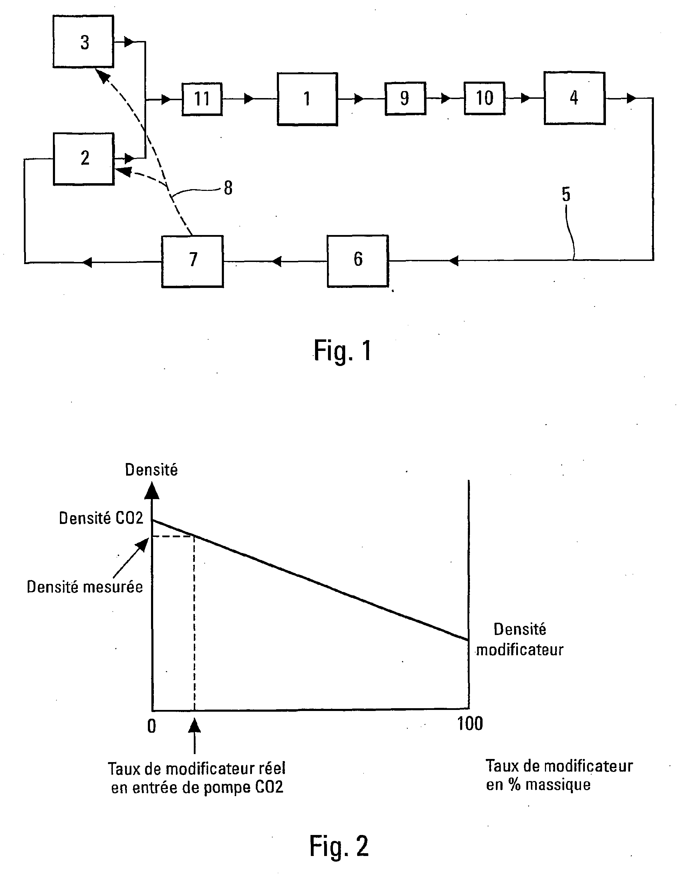

Selon un mode particulier de réalisation de l'invention, le procédé de chromatographie ou extraction comprend les opérations représentées à la figure 1.

De manière classique, une opération 1 de séparation a lieu dans une colonne de chromatographie ou dans un extracteur.

La colonne ou l'extracteur sont alimentés en un éluant incluant un fluide supercritique et un modificateur.

Le produit P est amené dans la colonne de chromatographie, par exemple par injection.

Un premier pompage 2 amène à la colonne ou à l'extracteur le fluide supercritique qui a subi au préalable une opération 6 de condensation.

Un deuxième pompage 3 amène le modificateur à la colonne ou à l'extracteur.

Ainsi, un mélange fluide supercritique-modificateur constituant l'éluant est formé pour l'opération 1 de séparation. A ce stade, l'éluant est de préférence dans un état supercritique.

Une opération 11 de régulation de la température de l'éluant peut être réalisée avant l'opération 1 de séparation. Par exemple, l'éluant est chauffé dans un échangeur de chaleur.

Une opération 4 de collecte d'au moins une fraction du produit P est réalisée en aval de la colonne ou de l'extracteur.

De préférence, une opération 9 de régulation de la pression et une opération 10 de régulation de la température de l'éluant sont réalisées à la suite de l'opération 1 de séparation et préalablement à l'opération 4 de collecte.

L'opération 9 de régulation de la pression consiste par exemple à détendre l'éluant enrichi d'au moins une fraction du produit P, à une pression inférieure à la pression critique du fluide supercritique. Si le fluide supercritique est le CO₂, la détente se fait donc à une pression inférieure à 74 bars, typiquement entre 30 et 65 bars.

Après la détente, le fluide supercritique est sous formes liquide et gazeuse. La partie liquide est majoritaire et dépend de la pression de détente.

Cette partie liquide peut être transformée en gaz par chauffage lors de l'opération 10 de régulation de la température.

Cette transformation résulte en une baisse de la masse volumique du fluide supercritique et donc de la solubilité du soluté constituant la fraction de produit P dans ce fluide. La solubilité du soluté dilué dans le modificateur devient presque nulle, ce qui permet de séparer le soluté, solide ou liquide, du fluide supercritique ramené à l'état gazeux, à l'aide de séparateurs gaz-solide ou gaz-liquide.

Une opération 5 de recyclage du fluide supercritique ramené à l'état gazeux et mélangé à une quantité résiduelle de modificateur fait suite à l'opération 4 de collecte et précède le premier pompage 2.

Il existe deux causes à la présence d'une quantité résiduelle de modificateur dans le fluide supercritique ramené à l'état gazeux à la suite de l'opération 4 de collecte.

Premièrement, le modificateur a une tension de vapeur qui entraîne une certaine solubilité dans le fluide supercritique ramené à l'état gazeux. Le pourcentage de modificateur qui est recyclé dépend de la solubilité du modificateur dans le fluide supercritique ramené à l'état gazeux et cette solubilité est fonction de la pression et de la température du fluide supercritique ramené à l'état gazeux dans les séparateurs.

Deuxièmement, le pourcentage de modificateur qui est recyclé dépend de l'efficacité de piégeage des séparateurs.

L'opération 6 de condensation fait suite à l'opération 4 de collecte et précède le premier pompage 2. Elle a lieu avantageusement pendant l'opération 5 de recyclage.

La pression et la température du mélange fluide supercritique ramené à l'état gazeux-modificateur, obtenues par les opérations 9, 10 correspondantes de régulation, sont constantes pendant les opérations 4, 5 de collecte et de recyclage et jusqu'à l'opération 6 de condensation, au cours de laquelle la température est abaissée.

En outre, le procédé selon l'invention comprend, en aval de l'opération 4 de collecte et en amont de l'opération 1 de séparation, une opération 7 de détermination d'au moins une grandeur liée au taux de modificateur mélangé au fluide supercritique recyclé et ramené à l'état gazeux ou liquide.

De préférence, pour faciliter la mise en oeuvre du procédé, l'opération 7 est réalisée en amont du premier pompage 2. Le fait de mesurer la masse volumique en entrée de pompe facilite l'opération, car, à ce stade du procédé, on peut maintenir, quelles que soient les conditions opératoires de débit, type et taille de colonne, température, etc., une pression et une température constantes pendant le procédé et d'un procédé sur l'autre.

Si nécessaire, une opération 8 de correction du débit du premier pompage 2 et du débit du deuxième pompage 3 est réalisée afin de limiter les variations, au cours du procédé, du taux de modificateur dans l'éluant à l'entrée de la colonne ou de l'extracteur. Les débits sont corrigés dans un sens propre à atteindre une première consigne, préalablement définie, du débit total correspondant à la somme des débits du premier pompage 2 et du deuxième pompage 3.

Plus particulièrement, la figure 1 représente une version avantageuse de l'invention. Selon cette version, l'opération 7 de détermination d'au moins une grandeur liée au taux de modificateur mélangé au fluide supercritique ramené à l'état liquide a lieu en amont des premier et deuxième pompages 2, 3. Elle comprend une opération de mesure, en au moins un point de mesure, de la masse volumique du fluide supercritique recyclé et ramené à l'état liquide, mélangé à une quantité résiduelle de modificateur, et une opération d'évaluation du taux de modificateur mélangé au fluide supercritique, le taux de modificateur étant évalué, à partir de la masse volumique mesurée, par l'intermédiaire d'une courbe de calibration masse volumique = f(taux de modificateur) préalablement établie à la pression et la température régnant au point de mesure et autour de celui-ci. Une telle courbe de calibration est représentée à la figure 2.

L'opération 8 de correction consiste dans ce cas à modifier le débit du premier pompage 2 et le débit du deuxième pompage 3 afin de satisfaire la première consigne et une deuxième consigne, préalablement fixée, de taux de modificateur dans l'éluant.

La masse volumique du fluide supercritique mélangé à une quantité résiduelle de modificateur est la somme des masses volumiques des constituants, soit fluide supercritique et modificateur, pondérées par leur pourcentage, avec un écart dans le cas où le mélange des constituants a un volume final différent de la somme des volumes initiaux des constituants.

Sur la figure 2, on entend par densité la masse volumique. De plus, le CO₂ est indiqué à titre d'exemple de fluide supercritique.

Pour tracer une courbe de calibration telle que représentée à la figure 2, la masse volumique du fluide supercritique mélangé à une quantité résiduelle de modificateur, indiquée en ordonnée, est mesurée pour différents taux de modificateur, en abscisse. Les différents mélanges fluide supercritique-modificateur sont réalisés par les premier et deuxième pompages, à une température et une pression données.

La variation de la masse volumique du fluide supercritique mélangé à une quantité résiduelle de modificateur en fonction du taux de modificateur dépend de la différence de masse volumique des constituants purs dans les conditions fixées de pression et température. Plus cette différence est importante, plus la variation de la masse volumique du mélange en fonction de sa composition l'est aussi, et plus la précision dans la détermination du taux de modificateur est grande.

Par conséquent, on se place de préférence dans les conditions de température et de pression auxquelles la différence de masse volumique des constituants purs est la plus grande.

La précision dans la détermination du taux de modificateur dépend bien sûr aussi de la précision de l'appareillage de mesure de la masse volumique.

La courbe masse volumique = f(taux de modificateur) est linéaire, sauf dans le cas cité précédemment où le mélange fluide supercritique-modificateur a un volume final différent de la somme des volumes initiaux de fluide supercritique et de modificateur.

Dans la configuration de l'invention représentée à la figure 1, le premier pompage 2 et le deuxième pompage 3 ont lieu en parallèle l'un de l'autre.

Toutefois, une configuration dans laquelle le deuxième pompage a lieu en amont du premier pompage fait également partie de l'invention.

On préfère mesurer la masse volumique afin de déterminer le taux de modificateur mélangé au fluide supercritique en ce que cette mesure est relativement facile à mettre en oeuvre et présente une bonne précision ; mais d'autres grandeurs physiques peuvent permettre d'obtenir la valeur du taux de modificateur mélangé au fluide supercritique. Par exemple, on peut mesurer la conductivité thermique du mélange ou encore effectuer une mesure d'absorption de ce mélange dans l'ultraviolet.

Selon une autre version avantageuse de l'invention, l'opération de détermination d'une grandeur liée au taux de modificateur mélangé au fluide supercritique recyclé et ramené à l'état liquide consiste à mesurer la masse volumique du mélange, qui est alors l'éluant, en amont du premier pompage et en aval du deuxième pompage. Dans ce cas, l'opération de correction consiste à modifier le débit du premier pompage et le débit du deuxième pompage dans un sens propre à atteindre la première consigne et une troisième consigne, préalablement fixée, de masse volumique de l'éluant.

Comme précédemment, on peut remplacer la mesure et la consigne de masse volumique de l'éluant par une mesure et une consigne de conductivité thermique ou d'absorption dans l'UV.

Dans cette configuration, on ne cherche pas à déterminer le taux de modificateur résiduel dans le fluide supercritique recyclé et ramené à l'état liquide ou gazeux, mais à viser une consigne de masse volumique en entrée de pompe. Pour cela, une boucle de régulation est réalisée.

La consigne de masse volumique est déterminée par exemple par mesure de la masse volumique correspondant au taux de modificateur dans l'éluant en l'absence de recyclage, en réglant les débits des pompages de façon à avoir le taux de modificateur et le débit total recherchés, dans des conditions opératoires fixées.

La boucle de régulation consiste à ajuster les débits des pompages dans le sens propre à respecter deux consignes, de masse volumique et de débit total. Un seul couple de valeurs des débits des premier et deuxième pompage répond à la fois à une consigne de masse volumique et à une consigne de débit total.

De manière avantageuse, l'opération 7 de détermination d'au moins une grandeur liée au taux de modificateur mélangé au fluide supercritique est effectuée en aval de l'opération 6 de condensation. En effet, de préférence, afin de mesurer la masse volumique, le fluide supercritique est ramené à l'état liquide en le refroidissant en dessous de la température d'équilibre liquide-vapeur, à la pression de recyclage qui est inférieure à la pression critique. Ainsi, les mesures sont plus précises que des mesures sur une phase gazeuse.

Toutefois, cette opération de détermination d'au moins une grandeur liée au taux de modificateur mélangé au fluide supercritique recyclé peut être effectuée en amont de l'opération de condensation. Dans ce cas, la masse volumique est mesurée sur le fluide supercritique ramené à l'état gazeux.

Un moyen de mesure de la masse volumique est par exemple l'utilisation d'un débitmètre massique basé sur le principe de Coriolis, qui permet d'obtenir le débit et la masse volumique, ou d'un appareil dédié à la mesure spécifique de la masse volumique d'un fluide ou d'un mélange de fluides à une pression et une température données.

La masse volumique mesurée peut être corrigée en tenant compte de la température.

Le fluide supercritique est de préférence le dioxyde de carbone mais peut être tout fluide compatible avec la chromatographie et/ou l'extraction en phase supercritique, tel qu'un alcane, un chloro-fluoroalcane et le xénon.

Le modificateur est de préférence un alcool, par exemple le méthanol, l'éthanol et l'isopropanol, mais peut aussi bien être tout solvant organique, tel que l'acétonitrile, le méthyl-tertiobutyléther ou MTBE et l'acétate d'éthyle. Il peut être un mélange d'au moins deux de ces composés.

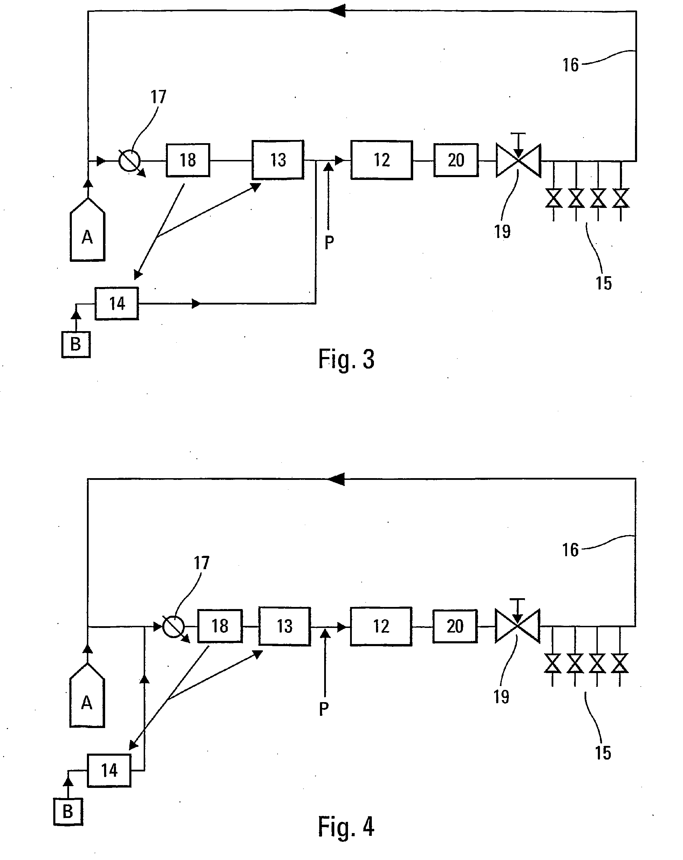

Les figures 3 et 4 représentent chacune schématiquement une installation conforme à l'invention, qui permet de mettre en oeuvre le procédé selon l'invention. On a choisi d'illustrer plus particulièrement des installations de chromatographie.

Les mêmes éléments composant l'installation sont chacun désignés par la même référence dans ces deux figures

A la figure 3 est illustrée une première configuration selon l'invention. Cette installation comprend un dispositif de séparation comprenant au moins une colonne 12 de chromatographie.

La colonne 12 reçoit un mélange incluant un produit P amené par injection et un éluant comprenant un fluide supercritique, tel que le CO₂, et un modificateur. Le fluide supercritique, conservé dans un récipient A, est amené par une première pompe 13 et le modificateur, conservé dans un récipient B, est amené par au moins une deuxième pompe 14.

A la sortie de la colonne 12, un détecteur 20 permet de détecter la ou les fractions du produit P qui sortent de la colonne avec l'éluant.

Ces fractions sont collectées dans un dispositif 15 de collecte comprenant au moins un séparateur solide-gaz ou liquide-gaz selon que le soluté constituant la fraction de produit P est solide ou liquide. Plusieurs séparateurs peuvent être mis en série.

Dans le cas d'un éluant qui serait exempt de modificateur et donc serait un fluide supercritique pur, son recyclage nécessiterait simplement de s'assurer du piégeage de tout le soluté dans le ou les séparateurs.

Dans le cas de l'invention, l'éluant comprend du modificateur entre 0 et 100% en poids, de préférence entre 0,1% et 70%, ou tout préférentiellement entre 0,5% et 35%. A la sortie de la colonne 12, on a un mélange d'éluant et de soluté, soit un mélange de trois constituants : fluide supercritique, modificateur et soluté.

Ce mélange est soumis à un dispositif pour réguler la pression et à un dispositif pour réguler la température. Ainsi, dans un premier temps, le mélange passe dans un détendeur 19 afin de réduire la pression de l'éluant. Il en résulte un mélange de fluide supercritique ramené à l'état liquide, fluide supercritique ramené à l'état gazeux, modificateur et soluté.

Ce dernier mélange est alors chauffé dans le dispositif pour réguler la température, afin de transformer la partie de fluide supercritique ramené à l'état liquide en du fluide supercritique ramené à l'état gazeux. On est donc en présence de deux phases : une phase liquide contenant le modificateur dans lequel le soluté est soluble et une phase gazeuse de fluide supercritique ramené à l'état, gazeux dans laquelle se trouve un certain taux de modificateur et des traces de soluté.

Un premier séparateur permet de séparer la phase liquide de la phase gazeuse et de collecter le soluté soluble dans le modificateur.

L'utilisation d'un second séparateur en série du premier permet de piéger la totalité du soluté.

Une voie 16 de recyclage du fluide supercritique ramené à l'état gazeux puis liquide mélangé à une quantité résiduelle de modificateur est placée entre le dispositif 15 de collecte et la première pompe 13. La première pompe 13 pompe au moins le fluide supercritique ramené à l'état liquide et mélangé à une quantité résiduelle de modificateur.

Le mélange pompé passe au préalable dans un condenseur 17 placé en aval du dispositif 15 de collecte et en amont de la première pompe 13. De préférence, le condenseur 17 est placé sur la voie 17 de recyclage.

L'installation selon l'invention inclut en outre un dispositif 18 de mesure et correction, placé sur la voie 16 de recyclage ou en aval de la première pompe 13 et en amont de la colonne 12 de chromatographie. Les mesures sont facilitées dans le cas où le dispositif 18 se trouve sur la voie 16 de recyclage, en amont de la première pompe 13.

Ce dispositif 18 mesure au moins une grandeur liée au taux de modificateur mélangé au fluide supercritique recyclé et, si nécessaire, effectue la correction du débit de la première pompe 13 et du débit de la deuxième pompe 14 afin de limiter les variations, au cours du fonctionnement de l'installation, de ce taux à l'entrée de la colonne 12 de chromatographie.

La correction est effectuée dans un sens propre à atteindre une première consigne, préalablement définie, de débit total. Le débit total correspond à la somme des débits de la première pompe 13 et de la deuxième pompe 14.

De préférence, le dispositif 18 de mesure et correction est placé en aval du condenseur 17.

Toutefois, le dispositif de mesure et correction peut aussi être placé en amont du condenseur.

Dans la première configuration particulière représentée à la figure 3, le dispositif 18 de mesure et correction est placé en un point de mesure situé en amont des première et deuxième pompes 13, 14, et plus précisément la première pompe 13 et la deuxième pompe 14 sont montées en parallèle l'une de l'autre.

Selon une deuxième configuration (non représentée) particulière de l'invention, la deuxième pompe est placée en amont de la première pompe et le dispositif de mesure et correction est placé en un point de mesure situé en amont de la deuxième pompe.

Dans ce cas, l'installation présente l'avantage de ne nécessiter qu'une pompe haute pression, qui est la première pompe 13. La deuxième pompe 14, en série et en amont de la première pompe 13, peut n'être qu'une pompe basse pression. La première pompe a par exemple une pression de refoulement comprise entre 30 et 300 bars, de préférence entre 100 et 300 bars, et la deuxième pompe a par exemple une pression de refoulement comprise entre 1 et 100 bars, de préférence de l'ordre de 50 bars.

Dans ces deux configurations, le dispositif 18 de mesure et correction mesure, au niveau du point de mesure, une première grandeur liée au taux de modificateur mélangé au fluide supercritique recyclé et ramené à l'état liquide, qui est de préférence la masse volumique du mélange. A partir de cette masse volumique mesurée, le dispositif 18 évalue une deuxième grandeur liée au taux de modificateur mélangé au fluide supercritique recyclé et ramené à l'état liquide, qui est le taux de modificateur, par l'intermédiaire d'une courbe de calibration telle que celle représentée à la figure 2.

Le dispositif 18 de mesure et correction modifie le débit de la première pompe 13 et le débit de la deuxième pompe 14 afin d'atteindre la première consigne et une deuxième consigne, préalablement fixée, de taux de modificateur dans le mélange fluide supercritique-modificateur.

Les consignes sont fixées par l'utilisateur en fonction de la manipulation qu'il souhaite réaliser avec l'installation selon l'invention.

Le fluide supercritique recyclé contient des traces de modificateur du fait de la solubilité de ce dernier dans le fluide supercritique ramené à l'état gazeux.

La première pompe 13 pompe du fluide supercritique ramené à l'état liquide et contenant du modificateur, et le débit en fluide supercritique est inférieur à sa valeur initiale, c'est-à-dire à la valeur fixée à la mise en marche de l'installation. Il est donc nécessaire d'augmenter le débit de la première pompe 13 pour ajuster le débit en fluide supercritique à sa valeur initiale en compensant la présence de modificateur.

Par exemple, le débit de fluide supercritique est fixé à la mise en marche de l'installation à une valeur de 80 g/min et le débit de modificateur à une valeur de 20 g/min. La première consigne de débit total est donc de 100 g/min et l'utilisateur fixe la deuxième consigne de taux de modificateur à 20%.

Le taux résiduel de modificateur dans le fluide supercritique recyclé est par exemple de 5%. Dans ce cas, si on ne corrige pas le débit de la première pompe 13, le débit réel de fluide supercritique sera égal à 95% de 80 g/min, soit à 76 g/min.

Il faut alors ajuster le débit de la première pompe 13 de manière à respecter l'égalité Q x 0,95 = 80 g/min, où Q est la valeur du débit corrigé de la première pompe 13. Ici, Q est égal environ à 84,2 g/min. Le débit de la première pompe 13 est donc augmenté de 4,2 g/min.

Le débit de la deuxième pompe 14 est diminué de manière à maintenir un taux de modificateur égal à 20% dans l'éluant et un débit total de 100 g/min. Le débit corrigé de la deuxième pompe 14 est égal à (100 - 84,2) soit à 15,8 g/min, ce qui correspond à une diminution du débit initial de (84,2 x 0,05) g/min soit d'environ 4,2 g/min.

Selon une troisième configuration particulière de l'invention, telle que représentée à la figure 4, le dispositif 18 de mesure et correction mesure la masse volumique de l'éluant en amont de la première pompe 13 et en aval de la deuxième pompe 14. Autrement dit, cette troisième configuration diffère des deux précédentes en ce que la deuxième pompe 14 est installée en amont du dispositif 18.

Dans cette troisième configuration, la correction consiste à modifier le débit de la première pompe et le débit de la deuxième pompe dans un sens propre à atteindre la première consigne et une troisième consigne, préalablement fixée, de masse volumique de l'éluant.

Cette troisième consigne peut être déterminée par l'utilisateur par calcul, sachant que la masse volumique du mélange fluide supercritique-modificateur est égale à la somme des masses volumiques respectives du fluide supercritique et du modificateur pondérées par leurs pourcentages respectifs, mais on préfère une détermination, plus précise, par mesure sur l'installation en fonctionnement sans recyclage.

Pour la régulation des débits des deux pompes 13, 14, chacune de ces pompes est asservie à un débitmètre.

Par exemple, un éluant est constitué de CO₂ comme fluide supercritique et d'éthanol comme modificateur. Pour une pression égale à 50 bars et une température de 0 °C, la masse volumique du CO₂ est de 950 kg/m³ et celle de l'éthanol de 789 kg/m³. Pour une précision sur la mesure de la masse volumique égale à +/- 0,1 kg/m³, on peut ajuster la composition de l'éluant CO₂-éthanol avec une précision de ±0,05%.

La précision est d'autant meilleure que les masses volumiques respectives du fluide supercritique et du modificateur sont différentes l'une de l'autre. Par exemple, dans le cas où le fluide supercritique est le CO₂, les alcools conviennent bien comme modificateurs en ce qu'ils sont de faibles masses volumiques et les solvants chlorés conviennent aussi en ce qu'ils sont de hautes masses volumiques.

Bien entendu, la colonne 12 de chromatographie peut être remplacée par plusieurs colonnes de chromatographie ou, dans le cas d'un procédé d'extraction, par un extracteur dans lequel se trouve le produit P.

Cette colonne 12 peut être une colonne contenant une phase stationnaire telle qu'utilisée en chromatographie en phase gazeuse ou une colonne contenant une phase stationnaire telle qu'utilisée en chromatographie en phase liquide, par exemple en chromatographie liquide de haute performance ou HPLC, ou encore toute autre colonne compatible avec la séparation à réaliser.

De même, l'extracteur utilisé dans l'invention peut présenter une phase stationnaire liquide ou solide.

## Revendications

1. Procédé de chromatographie ou extraction, comprenant :
- une opération (1) de séparation dans une colonne ou un extracteur, ladite colonne ou ledit extracteur recevant un produit P et étant alimenté en un éluant incluant un fluide supercritique, amené par un premier pompage (2), et un modificateur, amené par au moins un deuxième pompage (3),
- une opération (4) de collecte d'au moins une fraction du produit P en aval de la colonne ou de l'extracteur,
- une opération (5) de recyclage du fluide supercritique mélangé à une quantité résiduelle de modificateur, faisant suite à l'opération (4) de collecte et précédant le premier pompage (2), ledit premier pompage servant à pomper au moins ledit fluide supercritique mélangé à une quantité résiduelle de modificateur, et
- une opération (6) de condensation faisant suite à l'opération (4) de collecte et précédant le premier pompage (2),
ledit procédé étant **caractérisé en ce qu'**il comprend en outre :
- en aval de l'opération de collecte (4) et en amont de l'opération de séparation (1), une opération (1) de détermination d'au moins une grandeur liée au taux de modificateur mélangé au fluide supercritique recycle, et si nécessaire
- une opération (8) de correction du débit du premier pompage (2) et du débit du deuxième pompage (3), afin de limiter les variations, au cours du procédé, du taux de modificateur dans l'éluant à l'entrée de la colonne ou de l'extracteur, dans un sens propre à atteindre une première consigne, préalablement définie, de débit total correspondant à la somme des débits du premier pompage (2) et du deuxième pompage (3).

2. Procédé selon la revendication 1, dans lequel l'opération (7) de détermination d'au moins une grandeur liée au taux de modificateur mélangé au fluide supercritique recyclé a lieu en amont des premier et deuxième pompages (2, 3) et comprend :
- une opération de mesure, en au moins un point de mesure, de la masse volumique du fluide supercritique recyclé mélangé à une quantité résiduelle de modificateur, et
- une opération d'évaluation du taux de modificateur mélangé au fluide supercritique recyclé, le taux de modificateur étant évalué, à partir de la masse volumique mesurée, par l'intermédiaire d'une courbe de calibration masse volumique=f(taux de modificateur) préalablement établie à la pression et la température régnant au point de mesure et autour de celui-ci ; et
dans lequel l'opération (8) de correction consiste à modifier le débit du premier pompage (2) et le débit du deuxième pompage (3) afin de satisfaire la première consigne et une deuxième consigne, préalablement fixée, de taux de modificateur dans l'éluant.

3. Procédé selon la revendication 2, dans lequel le premier pompage (2) et le deuxième pompage (3) ont lieu en parallèle l'un de l'autre.

4. Procédé selon la revendication 2, dans lequel le deuxième pompage (3) a lieu en amont du premier pompage (2).

5. Procédé selon la revendication 1, dans lequel l'opération (7) de détermination d'une grandeur liée au taux de modificateur dans l'éluant consiste à mesurer la masse volumique de l'éluant en amont du premier pompage (2) et en aval du deuxième pompage (3), et
dans lequel l'opération (8) de correction consiste à modifier le débit du premier pompage (2) et le débit du deuxième pompage (3) dans un sens propre à atteindre la première consigne et une troisième consigne, préalablement fixée, de masse volumique de l'éluant.

6. Procédé selon l'une quelconque des revendications 1 à 5, dans lequel l'opération (7) de détermination d'au moins une grandeur liée au taux de modificateur mélangé au fluide supercritique recyclé est effectuée en aval de l'opération (6) de condensation.

7. Procédé selon l'une quelconque des revendications 1 à 5, dans lequel l'opération (7) de détermination d'au moins une grandeur liée au taux de modificateur mélangé au fluide supercritique recyclé est effectuée en amont de l'opération (6) de condensation.

8. Procédé selon l'une quelconque des revendications 1 à 7, dans lequel le fluide supercritique est le dioxyde de carbone.

9. Procédé selon l'une quelconque des revendications 1 à 8, dans lequel le modificateur est un solvant organique liquide, par exemple un alcool.

10. Procédé selon l'une quelconque des revendications 1 à 9, comprenant en outre au moins une opération (9) de régulation de la pression suivie d'au moins une opération (10) de régulation de la température, en aval de l'opération (1) de séparation et en amont de l'opération (4) de collecte.

11. Installation de chromatographie ou d'extraction comprenant :
- un dispositif de séparation tel qu'une, ou plusieurs colonnes (12) de chromatographie ou un extracteur, qui reçoit un produit (P) et est alimenté en un éluant comprenant un fluide supercritique, amené par une première pompe (13), et un modificateur, amené par au moins une deuxième pompe (14),
- un dispositif (15) de collecte d'au moins une fraction du produit P séparée dans le dispositif de séparation,
- une voie (16) de recyclage du fluide supercritique mélangé à une quantité résiduelle de modificateur, en aval du dispositif (15) de collecte et en amont de la première pompe (13), ladite première pompe pompant au moins ledit fluide supercritique mélange a une quantité résiduelle de modificateur, et
- un condenseur (17) placé en aval du dispositif (15) de collecte et en amont de la première pompe (13),
ladite installation étant **caractérisée en ce qu'**elle inclut en outre un dispositif (18) de mesure et correction, placé sur la voie (16) de recyclage ou en aval de la première pompe (13) et en amont du dispositif de séparation, qui mesure au moins une grandeur liée au taux de modificateur mélangé au fluide supercritique recyclé et qui, si nécessaire, effectue la correction du débit de la première pompe (13) et du débit de la deuxième pompe (14), afin de limiter les variations, au cours du fonctionnement de l'installation, dudit taux à l'entrée du dispositif de séparation; dans un sens propre à atteindre une première cosigne, préalablement définie, de débit total correspondant à la somme des débits de la première pompe (13) et de la deuxième pompe (14).

12. Installation selon la revendication 11, dans laquelle le dispositif (18) de mesure et correction est placé en un point de mesure situé en amont des première et deuxième pompes (13, 14) et mesure la masse volumique du fluide supercritique recyclé et mélangé à une quantité résiduelle de modificateur, à partir de laquelle il évalue le taux de modificateur mélangé au fluide supercritique recyclé par l'intermédiaire d'une courbe de calibration densité=f (taux de modificateur) pré-établie à la pression et la température régnant au point de mesure et autour de celui-ci ; et
dans laquelle ledit dispositif (18) de mesure et correction modifie le débit de la première pompe (13) et le débit de la deuxième pompe (14) afin d'atteindre la première consigne et une deuxième consigne, préalablement fixée, de taux de modificateur dans l'éluant.

13. Installation melon la revendication 12, dans laquelle la première pompe (13) et la deuxième pompe (14) sont montées en parallèle l'une de l'autre.

14. Installation selon la revendication 12, dans laquelle la deuxième pompe (14) est placée en amont de la première pompe (13).

15. Installation selon la revendication 11, dans laquelle le dispositif (18) de mesure et correction mesure la masse volumique de l'éluant en amont de la première pompe (13) est en aval de la deuxième pompe (14), et modifie le débit de la première pompe (13) et le débit de la deuxième pompe (14) dans un sens propre à atteindre la première consigne et une troisième consigne, préalablement fixée, de masse volumique de l'éluant.

16. Installation selon l'une quelconque des revendications 11 à 15, dans laquelle le dispositif (18) de mesure et correction est placé en aval du condenseur (17).

17. Installation selon l'une quelconque, des revendications 11 à 15, dans laquelle le dispositif (18) de mesure et correction est placé en amont du condenseur (17).

18. Installation selon l'une quelconque des revendications 11 à 17, incluant en outre un dispositif pour réguler la pression, par exemple un détendeur (19), suivi d'un dispositif pour réguler la température de l'éluant, par exemple pour chauffer celui-ci, en aval du dispositif de séparation et en amont du dispositif (15) de collecte.

## Claims

1. A chromatography or extraction method, including:
- a separating operation (1) in a column or an extractor, with the said column or the said extractor receiving a product (P) and feeding into an eluent that includes a supercritical fluid, routed via a first pumping operation (2), and a modifier, routed via at least one second pumping operation (3),
- an operation (4) for collecting at least one fraction of the product (P) downstream of the column or extractor,
- an operation (5) for recycling the supercritical fluid mixed with a residual quantity of modifier, following after the collecting operation (4) and preceding the first pumping operation (2), with the said first pumping operation being used to pump at least the said supercritical fluid mixed with a residual quantity of modifier, and
- a condensing operation (6) following after the collecting operation (4) and preceding the first pumping operation (2),
the said method being **characterised in that** it further includes:
- downstream of the collecting operation (4) and upstream of the separating operation (1), an operation for determining at least one magnitude associated with the level of modifier mixed with the recycled supercritical fluid, and if necessary
- an operation (8) for correcting the flow in the first pumping operation (2) and the flow in the second pumping operation (3), in order to limit the variations, during execution of the method, of the modifier level in the eluent at the input to the column or of the extractor, in a direction that is suitable for meeting a first setpoint, determined beforehand, for the total flow corresponding to the sum of the flows in the first-pumping operation (2) and in the second pumping operation (3).

2. The method according to claim 1, wherein the operation (7) for determining at least one magnitude associated with the level of modifier mixed with the recycled supercritical fluid takes place upstream of the first and second pumping operations (2, 3) and includes:
- an operation to measure, at one measuring point at least, the density of the recycled supercritical fluid mixed with a residual quantity of modifier, and
- an operation for evaluating the level of modifier mixed with the recycled supercritical fluid, with the modifier level being evaluated, from the measured density, by means of a density = f (modifier level) calibration curve, established beforehand at the pressure and the temperature existing at the measuring point and around the latter; and
- wherein the correction operation (8) consists of modifying the flow in the first pumping operation (2) and the flow in the second pumping operation (3) in order to meet the first setpoint and a second setpoint, set beforehand, of levels of modifier in the eluent.

3. The method according to claim 2, wherein the first pumping operation (2) and the second pumping operation (3) take place in parallel with each other.

4. The method according to claim 2, wherein the second pumping operation (3) takes place upstream of the first pumping operation (2).

5. The method according to claim 1, wherein the operation (7) for determining a magnitude associated with the modifier level in the eluent consists of measuring the density of the eluent upstream of the first pumping operation (2) and downstream of the second pumping operation (3), and
wherein the correction operation (8) consists of modifying the flow in the first pumping operation (2) and the flow in the second pumping operation (3) in a direction that is suitable to attain the first setpoint and a third setpoint, set beforehand, for the density of the eluent.

6. The method according to any one of claims 1 to 5, wherein the operation (7) for determining at least one magnitude associated with the level of modifier mixed with the recycled supercritical fluid is effected downstream of the condensing operation (6).

7. The method according to any one of claims 1 to 5, wherein the operation (7) for determining at least one magnitude associated with the level of modifier mixed with the recycled supercritical fluid is effected upstream of the condensing operation (6).

8. The method according to any one of claims 1 to 7, wherein the supercritical fluid is carbon dioxide.

9. The method according to any of claims 1 to 8, wherein the modifier is an organic liquid solvent, like an alcohol for example.

10. The method according to any one of claims 1 to 9, further including at least one operation (9) for regulating the pressure followed by at least one operation (10) for regulating the temperature, downstream of the separating operation (1) and upstream of the collecting operation (4).

11. A chromatography or extraction installation including:
- a separating device such as one or more chromatography columns (12) or an extractor, which receives a product (P) and feeds into an eluent that includes a supercritical fluid, routed via a first pump (13), and a modifier, routed via at least one second pump (14),
- a device (15) for collecting at least one fraction of the product (P) separated in the separating device,
- a path (16) for recycling the supercritical fluid mixed with a residual quantity of modifier, downstream of the collecting device (15) and upstream of the first pump (13), with the said first pump pumping at least the said supercritical fluid mixed with a residual quantity of modifier, and
- a condenser (17) placed downstream of the collecting device (15) and upstream of the first pump (13),
the said installation being **characterised in that** it further includes a measuring and correcting device (18), placed in the recycling path (16) or in, downstream of the first pump (13) and upstream of the separating device, which measures at least one magnitude associated with the level of modifier mixed with the recycled supercritical fluid and that, if necessary, performs correction of the flow in the first pump (13) and of the flow in the second pump (14), in order to limit the variations, while running the installation, of the said levels at the input to the separating device, in a direction that is suitable for meeting a first setpoint, determined beforehand, for the total flow corresponding to the sum of the flows in the first pump (13) and in the second pump (14).

12. The installation according to claim 11, wherein the measuring and correcting device (18) is positioned at a measuring point located upstream of the first and second pumps (13, 14) and measures the density of the recycled supercritical fluid, mixed with a residual quantity of modifier, from which it evaluates the level of modifier mixed with the recycled supercritical fluid by means of a preestablished density = f (modifier level) calibration curve at the pressure and the temperature existing at the measuring point and around the latter; and
wherein the said of measuring and correcting device (18) modifies the flow in the first pump (13) and the flow in the second pump (14) in order to attain the first setpoint and a second setpoint, set beforehand, of modifier level in the eluent.

13. The installation according to claim 12, wherein the first pump (13) and the second pump (14) are mounted in parallel with each other.

14. The installation according to claim 12 wherein the second pump (14) is positioned upstream of the first pump (13).

15. The installation according to claim 11, wherein the measuring and correcting device (18) measures the density of the eluent upstream of the first pump (13) and downstream of the second pump (14), and modifies the flow in the first pump (13) and the flow in the second pump (14) in a direction that is suitable for meeting the first setpoint and a third setpoint, fixed beforehand, for the density of the eluent.

16. The installation according to any one of claims 11 to 15, wherein the measuring and correcting device (18) is placed downstream of the condenser (17).

17. The installation according to any one of claims 11 to 15, wherein the measuring and correcting device (18) is placed upstream of the condenser (17).

18. The installation according to any one of claims 11 to 17, further including a device to regulate the pressure, such as a pressure-reducer for example (19), followed by a device to regulate the temperature of the eluent, by heating it for example, downstream of the separating device and upstream of the collecting device (15).

## Patentansprüche

1. Chromatographie- oder Extraktionsverfahren mit:
- einem Trennungsvorgang (1) in einer Säule oder in einem Extraktor, wobei die Säule oder der Extraktor ein Produkt P erhält und mit einem Eluiermittel versorgt wird, das ein durch einen ersten Pumpvorgang (2) zugeführtes superkritisches Fluid und einen durch wenigstens einen zweiten Pumpvorgang (3) zugeführten Modifikator beinhaltet,
- einem Sammelvorgang (4) wenigstens einer Fraktion des Produkts P stromabwärts der Säule oder des Extraktors,
- einem Rezirkulationsvorgang (5) des mit einer Restmenge des Modifikators gemischten superkritischen Fluids nach dem Sammelvorgang (4) und vor dem ersten Pumpvorgang (2), wobei der erste Pumpvorgang dazu dient, wenigstens das mit einer Restmenge des Modifikators gemischte superkritische Fluid zu fördern, und
- einem Kondensationsvorgang (6) nach dem Sammelvorgang (4) und vor dem ersten Pumpvorgang (2),
wobei das Verfahren **dadurch gekennzeichnet ist, dass** dieses ferner umfasst:
- stromabwärts des Sammelvorgangs (4) und stromaufwärts des Trennungsvorgangs (1) einen Bestimmungsvorgang (7) wenigstens einer Größe, die mit der Menge des Modifikators verbunden ist, die mit dem rezirkulierten superkritischen Fluid vermischt ist, und falls notwendig,
- einen Korrekturvorgang (8) der Liefermenge des ersten Pumpvorgangs (2) und der Liefermenge des zweiten Pumpvorgangs (3), um so im Verlauf des Verfahrens die Variationen der Modifikatormenge in dem Eluiermittel am Eingang der Säule oder des Extraktors in geeigneter Weise zu begrenzen, um einen ersten, vorher definierten Einstellwert der Gesamtmenge zu erreichen, der der Summe der Liefermengen des ersten Pumpvorgangs (2) und des zweiten Pumpvorgangs (3) engtspricht.

2. Verfahren nach Anspruch 1, in welchem der Bestimmungsvorgang (7) wenigstens eines mit der Menge des in dem rezirkulierten superkritischen Fluids vermischten Modifikators an einer Stelle stromaufwärts des ersten und zweiten Pumpvorgangs (2, 3) eingebunden ist, und mit:
- einem Messvorgang an wenigstens einem Messpunkt der Volumenmasse des in einer Restmenge des Modifikators vermischten, rezirkulierten superkritischen Fluids, und
- einem Evaluierungsvorgang der Modifikatormenge, die mit dem rezirkulierten superkritischen Fluid vermischt ist, wobei die Modifikatormenge ausgehend von der gemessenen Volumenmasse mithilfe einer Volumenmasse-Kalibrierungskurve ausgewertet wird, die vorher anhand des Drucks und der Temperatur, die am Messpunkt und um diesen herum vorliegen, erstellt wurde; und
in welchem der Korrekturvorgang (8) darin besteht, die Liefermenge des ersten Pumpvorgangs (2) und die Liefermenge des zweiten Pumpvorgangs (3) zu modifizieren, um so den ersten Einstellwert und einen vorher festgelegten zweiten Einstellwert der Modifikatormenge in dem Eluiermittel zu erfüllen.

3. Verfahren nach Anspruch 2, in welchem der erste Pumpvorgang (2) und der zweite Pumpvorgang (3) an einer zueinander parallelen Stelle liegen.

4. Verfahren nach Anspruch 2, in welchem der zweite Pumpvorgang (3) an einer Stelle stromaufwärts des ersten Pumpvorgangs (2) liegt.

5. Verfahren nach Anspruch 1, in welchem der Bestimmungsvorgang (7) einer mit der Modifikatormenge in dem Eluiermittel verbundenen Größe darin besteht, die Volumenmasse des Eluiermittels stromaufwärts des ersten Pumpvorgangs (2) und stromabwärts des zweiten Pumpvorgangs (3) zu messen, und
in welchem der Korrekturvorgang (8) darin besteht, die Liefermenge des ersten Pumpvorgangs (2) und die Liefermenge des zweiten Pumpvorgang (3) in einer geeigneten Weise zu modifizieren, um den ersten Einstellwert und einen vorher festgelegten dritten Einstellwert der Volumenmasse des Eluiermittels zu erreichen.

6. Verfahren nach einem der Ansprüche 1 bis 5, in welchem der Bestimmungsvorgang (7) wenigstens einer mit der Modifikatormenge, der mit dem rezirkulierten superkritischen Fluid vermischt ist, verbundenen Größe stromabwärts des Kondensationsvorgangs (6) ausgerührt wird.

7. Verfahren nach einem der Ansprüche 1 bis 5, in welchem der Bestimmungsvorgang (7) wenigstens einer mit der Modifikatormenge, der in dem rezirkulierten superkritischen Fluid vermischt ist, verbundenen Größe stromaufwärts des Kondensationsvorgangs (6) ausgeführt wird.

8. Verfahren nach einem der Ansprüche 1 bis 7, in welchem das superkritische Fluid Kohlendioxid ist.

9. Verfahren nach einem der Ansprüche 1 bis 8, in welchem der Modifikator ein flüssiges organisches Lösungsmittel, zum Beispiel ein Alkohol, ist.

10. Verfahren nach einem der Ansprüche 1 bis 9, mit ferner wenigstens einem Regulierungsvorgang (9) des Drucks sowie von wenigstens einem Regulierungsvorgang (10) der Temperatur stromabwärts des Trennungsvorgangs (1) und stromwärts des Sammelvorgangs (4).

11. Chromatographie- oder Extraktionsanlage mit:
- einer Trennungseinrichtung, wie ein oder mehreren Chromatographiesäulen (12) oder einem Extraktor, die/der ein Produkt (P) erhält und mit einem durch eine erste Pumpe (13) zugeführtes Eluiermittel mit einem superkritischen Fluid und einem durch wenigstens eine zweite Pumpe (14) zugeführten Modifikator versorgt wird,
- einer Sammeleinrichtung (15) für wenigstens eine Fraktion des Produkts P, die in der Trennungseinrichtung abgetrennt wurde,
- einem Rezirkulierungsweg, (16) des mit einer Restmenge des Modifikators vermischten superkritischen Fluids stromabwärts der Sammeleinrichtung (15) und stromaufwärts der ersten Pumpe (13), wobei die erste Pumpe wenigstens das mit einer Restmenge des Modifikators vermischte superkritische Fluid fördert, und
- einem Kondensator (17), der stromabwärts der Sammeleinrichtung (15) und stromaufwärts der ersten Pumpe (13) angeordnet ist,
wobei die Anlage **dadurch gekennzeichnet ist, dass** diese ferner eine Mess- und Korrektureinrichtung (18) umfasst, die an dem Rezirkulierungsweg (16) oder stromabwärts der ersten Pumpe (13) und stromaufwärts der Trennungseinrichtung angeordnet ist, welche wenigstens eine Größe misst, die mit dem Betrag des mit dem rezirkulierten superkritischen Fluid vermischten Modifikators verbunden ist und die, falls notwendig, die Korrektur der Liefermenge der ersten Pumpe (13) und der Liefermenge der zweiten Pumpe (14) ausführt, um so die Variationen im Verlauf des Betriebs der Anlage des Betrags am Eingang der Trennungseinrichtung in einer geeigneten Weise zu begrenzen, so dass ein vorher definierter erster Einstellwert der Gesamtliefermenge erreicht wird, der der Summe der Liefermengen der ersten Pumpe (13) und der zweiten Pumpe (14) entspricht.

12. Anlage nach Anspruch 11, in welcher die Mess- und Korrektureinrichtung (18) an einem Messpunkt angeordnet ist, der stromaufwärts der ersten und zweiten Pumpen (13, 14) liegt und die Volumenmasse des rezirkulierten und mit einer Restmenge des Modifikators vermischten superkritischen Fluids misst, wobei sie davon ausgehend den Betrag des mit dem rezirkulierten superkritischen Fluid vermischten Modifikators mithilfe einer Dichte-f(Modifikatorbetrag)-Kalibrierungskurve bewertet, die vorher aufgrund des Drucks einer Temperatur erstellt wurde, die am Messpunkt und um diesen herum herrschen; und
in welcher die Mess- und Korrektureinrichtung die Liefermenge der ersten Pumpe (13) und die Liefermenge der zweiten Pumpe (14) modifiziert, um so den ersten Einstellwert und einen vorher festgelegten zweiten Einstellwert des Modifikatorbetrags in dem Eluiermittel zu erreichen.

13. Anlage nach Anspruch 12, in welcher die erste Pumpe (13) und die zweite Pumpe (14) parallel zueinander montiert sind.

14. Anlage nach Anspruch 12, in welcher die zweite Pumpe (14) stromaufwärts der ersten Pumpe (13) angeordnet ist.

15. Anlage nach Anspruch 11, in welcher die Mess- und Korrektureinrichtung (18) die Volumenmasse des Eluiermittels stromaufwärts der ersten Pumpe (13) und stromabwärts der zweiten Pumpe (14) misst und die Liefermenge der ersten Pumpe (13) und die Liefermenge der zweiten Pumpe (14) in einer geeigneten Weise modifiziert, um den ersten Einstellwert und einen vorher festgelegten dritten Einstellwert der Volumenmasse des Eluiermittels zu erreichen.

16. Anlage nach einem der Ansprüche 11 bis 15, in welcher die Mess- und Korrektureinrichtung (18) stromabwärts des Kondensators (17) angeordnet ist.

17. Anlage nach einem der Ansprüche 11 bis 15, in welcher die Mess- und Korrektureinrichtung (18) stromaufwärts des Kondensators (17) angeordnet ist.

18. Anlage nach einem der Ansprüche 11 bis 17, ferner mit einer Einrichtung zum Regulieren des Druckes, zum Beispiel einem Druckminderer (19), sowie einer Einrichtung zum Regulieren der Temperatur des Eluiermittels, zum Beispiel um dieses zu erwärmen, stromabwärts der Trenneinrichtung und stromaufwärts der Sammeleinrichtung (15).
